# EUROPEAN PATENT APPLICATION

(11) **EP 2 206 755 A1**
(43) Date of publication of application: **14.07.2010**
(21) Application number: 08845840.1
(22) Date of filing: 23.10.2008
(51) Int. Cl.: C09D 201/00, A01K 75/00, A01N 25/04, A01N 37/32, A01N 43/36, A01N 43/40, A01N 43/80, A01N 47/04, A01N 55/02, A01N 59/20, A01P 3/00, C09D 5/16, C09D 7/12

(54) **ANTI-STAIN COATING COMPOSITION CONTAINING COPPER COMPOUND AND HAVING IMPROVED SLIME RESISTANCE AND STORAGE STABILITY**

(30) Priority: 31.10.2007 JP 2007283948
(71) Applicant: CHUGOKU MARINE PAINTS, LTD., Ohtake-shi Hiroshima 739-0652 (JP)
(72) Inventor: TANAKA, Hideyuki, Ohtake-shi Hiroshima 739-0652 (JP)
(74) Representative: HOFFMANN EITLE
(86) International application number: PCT/JP2008/069231
(87) International publication number: WO 2009/057505

(57) **Abstract**

The present invention provides an antifouling coating composition, which can form an antifouling coating film capable of giving excellent slime resistance and has a property such that the recrystallization of an antifouling agent in a paint is depressed. The antifouling coating composition of the present invention is obtainable by blending a coating film forming resin (A) with as an antifouling agent, an inorganic copper antifouling agent (B) such as copper suboxide, etc and N,N'-dimethyl-N'-tolyl(N-fluorodichloromethylthio)sulfamide (C). The antifouling agent (B) is contained in an amount of preferably 60 to 1000 parts by weight based on 100 parts by weight of the coating film forming resin (A), and the antifouling agent (C) is contained in an amount of preferably 1.4 to 80 parts by weight based on 100 parts by weight of the coating film forming resin (A) and also the antifouling agent (C) is contained in an amount of preferably 0.1 to 100 parts by weight based on 100 parts by weight of the antifouling agent (B).

## Description

### TECHNICAL FIELD

The present invention relates to an antifouling coating composition containing an antifouling agent such as copper suboxide, which composition is used for preventing a base material from fouling by aquatic organisms, and also relates to uses of the antifouling coating composition.

### BACKGROUND ART

As a paint for bottoms of a ship, paints containing a copper compound such as copper suboxide have been used widely because of having excellent resistance to barnacles. However, depending to the case that the rate of operation of a ship is low or the conditions of waters, slimes (microorganism membranes) such as diatoms are adhered on the bottoms and thereby the bottoms easily color to pale green, particularly the color change frequently becomes problems in ships required having beautiful exteriors such as pleasure boats.

Under the circumstance, a conventional antifouling paint is sometimes blended with, to be used as a slime resistant agent for preventing adhesion of slimes, an organic antifouling agent such as N,N'-dimethyl-N'-phenyl-(N-fluorodichloromethylthio) sulfamide, 2,4,6-trichlorophenylmaleimide, and 2,3,5,6-tetrachloro-4-(methyl sulfonyl) pyridine in addition to a copper compound such as copper suboxide.

For example, JP-A-2006-152205 (Patent document 1) discloses an antifouling coating composition containing a resin component such as a hydrolysable acrylic resin having a metal salt bond, and an antifouling agent such as N,N'-dimethyl-N'-phenyl(N-fluorodichloromethylthio) sulfamide and copper suboxide in the example. JP-3396349 (Patent document 2) discloses an antifouling coating composition containing a hydrolysable copolymer having a triorganosilyl group, copper suboxide and N,N'-dimethyl-N'-phenyl-(N-fluorodichloromethylthio) sulfamide in the example. Moreover, JP-A-2004-315810 (Patent document 3) discloses an invention of antifouling paint having an improved endurance of antifouling effect which paint contains an inorganic carrier such as zinc oxide and an organic antifouling agent such as N,N'-dimethyl-N'-tolyl-(N-fluorodichloromethylthio) sulfamide.
Patent Document 1: JP-A-2006-152205
Patent Document 2: JP-3396349
Patent Document 3: JP-A-2004-315810

### DISCLOSURE OF THE INVENTION

### SUBJECT TO BE SOLVED BY THE INVENTION

Conventionally known antifouling coating compositions still have room for improving the slime resistant properties. When the loadings of an antifouling agent to a paint is increased in order to improve the slime resistant properties, the antifouling agent is re-crystallized during storage and thereby the coating properties are apt to be defective to induce a wrong condition such that a tip of a spray gun is clogged during coating operation.

It is an object of the invention to provide an antifouling coating composition capable of forming an antifouling coating film having excellent slime resistant properties and having a property that the re-crystallization of the antifouling agent contained in a paint is depressed.

### MEANS FOR SOLVING THE SUBJECT

The present inventors found that an antifouling coating composition having a property such that re-crystallization is not caused during storage and capable of forming an antifouling coating film having remarkable slime resistance is obtainable by blending, as an antifouling agent, a copper compound such as copper suboxide or copper rhodanate, in combination with N,N'-dimethyl-N'-tolyl-(N-fluorodichloromethyl this) sulfamide to a coating film forming resin. Thus, the present invention has been accomplished.

That is to say, the antifouling coating composition of the present invention comprises a coating film forming resin (A) and at least one inorganic copper antifouling agent (B) selected from the group consisting of copper suboxide, copper thiocyanate, basic copper sulfate, copper chloride, copper oxide and powdery copper as an antifouling agent, and further comprises N,N'-dimethyl-N'-tolyl- (N-fluorodichloromethylthio)sulfamide (C) as a slime resistant agent.

The antifouling agent (B) is contained in an amount of preferably 60 to 1000 parts by weight based on 100 parts by weight of the hydrolytic copolymer (A).
The antifouling agent (C) is contained in an amount of preferably 1.4 to 80 parts by weight based on 100 parts by weight of the coating film forming resin (A).
Moreover, the antifouling agent (C) is contained in an amount of preferably 0.1 to 100 parts by weight based on 100 parts by weight of the antifouling agent (B).

The coating film forming resin (A) is preferably at least one resin selected from the group consisting of a metal salt bond containing acrylic resin, a trialkyl silyl group containing acrylic resin, an acrylic resin (excluding the above metal salt bond and trialkyl silyl group containing acrylic resins), a vinyl chloride resin, a vinyl chloride-vinyl acetate copolymer, a vinyl chloride-vinyl isobutylether copolymer, a chlorinated rubber resin, a chlorinated polyethylene resin, a chlorinated polypropylene resin, a styrene-butadiene resin, a polyester resin, an epoxy resin, a phenol resin, a synthetic rubber, a silicone rubber, a silicone resin, a petroleum resin, an oily resin, a fluorine resin, a polybutene resin, a polyurethane resin, a polyamide resin, a ketone resin, an alkid resin and a cumarone resin. The coating film forming resin (A), further, may comprise at least one selected from the group consisting of rosin, a rosin ester resin, a rosin soap, naphthenic acid, versatic acid and triphenyl isobutenyl cyclohexene carboxylic acid.

The antifouling coating composition of the present invention, further, may comprise at least one selected from an antifouling agent (D) except for the above antifouling agents (B) and (C), such as an organic antifouling agent including copper pyrithione, a coloring pigment (E) such as red iron oxide, an extender pigment (F) such as talc, a dehydrating agent (G) such as anhydrous gypsum, and a plasticizer (H) such as chlorinated paraffin in an amount 0.5 to 5 % by weight based on all the solid components in the antifouling coating composition.

### EFFECT OF THE INVENTION

Using the antifouling coating composition of the present invention, an antifouling coating film having sufficient slime resistance can be formed for ships etc in need of beautiful surfaces without problems such that coating properties are inferior by re-crystal substances in a paint and thereby coating operation is hindered.

### BEST MODE FOR CARRYING OUT THE INVENTION

In defining the content of a component in the present invention, the weight of a substance which is a standard is a weight of components capable of constituting a dried coating film, which are excluding volatile components such as polymerization solvents for resins and solvents for diluting a paint, namely, a weight of solid components.

In the present invention, the term "slime" is film-like aggregate including algae (diatom, green algae and the like), bacterium and other microscopic organisms, and the term "slime resistance" is a capability for preventing the base material surface from the formation of such slimes.

### Components of the Antifouling coating composition

### <Coating film forming resin (A)>

As the coating film forming resin (A) of the present invention, the following various resins, which are also used in conventionally known antifouling coating compositions, can be used. These coating film forming resins may be used singly, or two or more thereof may be combined for use.

For example, the coating film resin (A) is preferably a resin having hydrolysis properties in an alkali atmosphere such as seawater, e.g. an acrylic resin containing a prescribed metal salt bond or a trialkylsilyl group (described in detail later) from the standpoint of self polishing properties of antifouling coating films, and controlled-release properties of antifouling agents.

In addition to the resins having hydrolysis properties and being soluble in water, the coating film forming resin (A) may contain resins non-soluble in water and slightly soluble in water, such as the acrylic resin containing neither a metal salt bond nor a trialkylsilyl group, a chlorinated vinyl resin, a chlorinated vinyl-vinyl acetate copolymer, a chlorinated vinyl-vinylisobutylether copolymer, a chlorinated rubber resin, a chlorinated polyethylene resin, a chlorinated polypropylene resin, a styrene-butadiene resin, a polyester resin, an epoxy resin, a phenol resin, a synthetic rubber, a silicone rubber, a silicone resin, a petroleum resin, an oily resin, a fluorine resin, a polybutene resin, a polyurethane resin, a polyamide resin, a ketone resin, an alkid resin or a cumarone resin.

The coating film forming resin (A), further, may contain a rosin (e.g. rosin, a rosin ester resin, rosin soap), a resin such as pine tal, and a monobasic organic acid such as naphthenic acid, versatic acid and triphenyl isobutenyl cyclohexene carboxylic acid. These components also function as an eluting assistant (a material for assisting solubility of a coating film) for the coating film forming resin (A). For example, it is preferred to simultaneously use a rosin, and an acrylic resin having a prescribed metal bond or a trialkylsilyl group or a chlorinated vinyl-vinylisobutylether copolymer.

In the present invention, when the above rosin, naphthenic acid and the like are mixed with the coating film forming resin (A) and used, the amounts of these components are counted into the amount of the coating film forming resin (A) in the definition of the amounts of various other components including the antifouling agents (B) and (C) described later.

Preferable examples of the acrylic resin containing a metal salt bond (metal salt bond-containing copolymer) are acrylic resins having a side chain end type metal salt bond represented by the following formula (I), a crosslinking type metal salt bond represented by the following formula (II) or both of them.

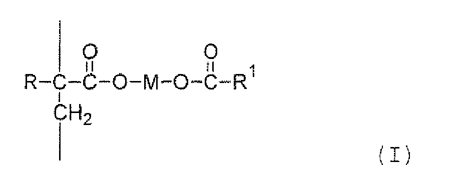

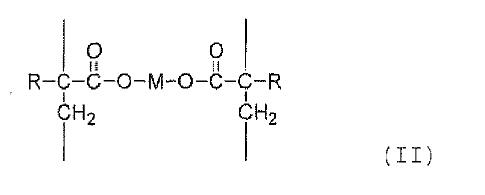

In the formula (I) or (II), M indicates zinc or copper, R indicates hydrogen or a methyl group and R¹ indicates an organic group. In the metal salt bond-containing acrylic resin, there are usually plural metal salt bonds represented by the formula (I) or (II), and plural R's, plural R¹'s or plural M's may be the same or different each other respectively.

The organic group R¹ in the formula (I) is an organic acid residue formed from a monobasic acid, preferably a saturated or unsaturated aliphatic hydrocarbon group having 2 to 30 carbon atoms, a saturated or unsaturated cyclic hydrocarbon group having 3 to 20 carbon atoms, an aromatic hydrocarbon group having 6 to 18 carbon atoms, or substituents thereof, more preferably a saturated or unsaturated aliphatic hydrocarbon group having 10 to 20 carbon atoms, a saturated or unsaturated aliphatic hydrocarbon group having 3 to 20 carbon atoms or substituents thereof. Among them, most preferable examples of the organic group R¹ are those having an organic acid residue formed from versatic acid, palmitic acid, stearic acid, oleic acid, linolic acid, linolenic acid (containing structural isomers of these unsaturated aliphatic acids, e.g. iso-stearic acid), abietic acid, neo-abietic acid, pimaric acid, dehydro-abietic acid, 12-hydroxystearic acid and naphthenic acid. Such an acrylic resin having R¹ can be easily prepared and can make an antifouling coating film into having excellent hydrolysis properties and wet-on-wet coating properties.

Such an acrylic resin containing a side chain end type or crosslinking type acrylic resin can be prepared by, for example, copolymerizing a monomer having a metal salt bond represented by the following formula (III), a monomer having a metal salt bond represented by the following formula (IV) and a polymerizable unsaturated monomer capable of copolymerizing with these monomers and used for other acrylic resins having no metal salt bond.

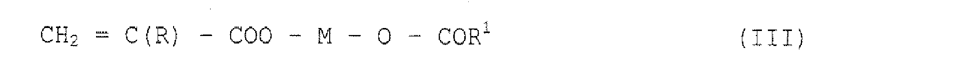

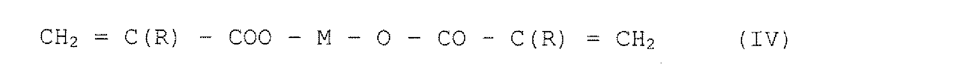

In the formula (III) or (IV), M indicates zinc or copper, R indicates hydrogen or a methyl group and R¹ indicates an organic group (which is the same as in the formulas (I) and (II)) provided that R¹ in the formula (III) does not contain a vinyl group [-CH = CH₂] and an isopropenyl group [-C(CH₃) = CH₂] in order to distinguish from the metal containing monomer represented by the formula (IV). Preferable kinds of R¹ in the formula (III) are the same as those in the formula (I).

Moreover, the acrylic resin having a side chain end group represented by the formula (I) can be prepared by preparing an acrylic resin using (meth)acrylic acid, alkyl(meth)acrylate, alkoxyalkyl (meth) acrylate, hydroxyalkyl (meth)acrylate acryl etc and then carrying out a reaction for introducing a structure that an organic group (R¹) is bonded to a carboxyl group not forming a metal salt bond present in the side chain of the resin through copper or zinc (M). In the case of preparing the acrylic resin by the above method, preferable kinds of R¹ in the formula (I) are the same as above.

The monomer represented by the formula (IV) can be prepared by a conventionally known method such that, for example, an inorganic metal compound (oxide, hydroxide or chloride of zinc or copper) and a (meth)acrylic acid or a ester compound thereof are heated and stirred in the presence of an alcohol organic solvent and water at a temperature lower than the decomposition temperature of the metal salt.

The other monomers (not having a metal salt bond) capable of copolymerizing the monomer having a metal salt bond represented by the formula (III) or (IV) can be appropriately selected from conventionally known polymerizable unsaturated monomers for acrylic resins. Preferable examples thereof are an alkyl(meth)acrylate, an alkoxyalkyl(meth)acrylate and a hydroxyalkyl(meth)acrylate, and especially preferable examples are methyl(meth)acrylate, ethyl(meth)acrylate, butyl(meth)acrylate and 2-hydroxyethyl(meth)acrylate. Moreover, it is possible to use styrene and a styrene derivative; a vinyl ester such as vinyl acetate and vinyl propionate; (meth)acrylamide and derivatives thereof; and (meth)acrylonitrile.

The above-described metal salt bond containing copolymer has a content of zinc and/or copper derived from the structure of the formula (I) of preferably 0.5 to 20 % by weight, more preferably 1 to 19 % by weight based on the copolymer. Using the metal salt bond containing copolymer satisfying the above conditions, an antifouling coating film having not only excellent antifouling properties but also excellent consumption properties can be formed. The content of zinc and/or copper can be determined in the above range by regulating the proportion of the monomer containing these metals and other monomers used in the preparation of the metal salt bond containing copolymer, or the amount of the added zinc and/or copper containing compound, which is reacted with the acrylic resin later.

In the metal salt bond containing acrylic resin, the number average molecular weight (Mn: a value relative to polystyrene by GPC) and the weight average molecular weight (Mw: a value relative to polystyrene by GPC) can be appropriately regulated in consideration of the viscosity or storage stability of an antifouling coating composition or the eluting rate of an antifouling coating film. The Mn is usually about 1,000 to 100, 000, preferably 1,000 to 50,000, and the Mw is usually about 1,000 to 20,000, preferably 1,000 to 10,000.

A suitable example of the acrylic resin having a trialkylsilyl group is an acrylic resin containing a component unit derived from a trialkylsilyl ester of (meth)acrylic acid represented by the formula (V) in an amount of preferably 20 to 65 % by weight, more preferably 30 to 55 % by weight.

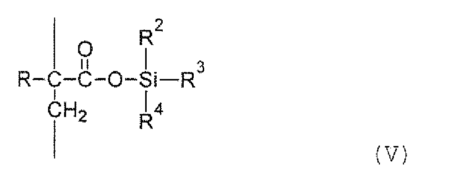

In the formula (V), R indicates hydrogen or a methyl group, and R², R³ and R⁴ each represents independently an alkyl group having 1 to 18 carbon atoms. In the trialkylsilyl group containing acrylic resin, there are usually plural of the structures represented by the formula (V), and plural R²'s, plural R³'s and plural R⁴'s may be the same or different each other, respectively.

The trialkylsilyl group containing acrylic resin can be prepared by copolymerizing a (meth)acrylic acid trialkylsilyl ester monomer represented by the following formula (VI) with a different polymerizable unsaturated monomer used for acryl resins not containing trialkylsilyl group which unsaturated monomer is polymerizable with this monomer.

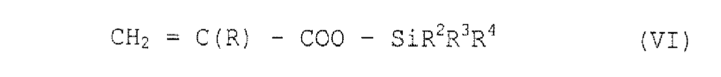

In the formula (VI), R indicates hydrogen or a methyl group, R², R³ and R⁴ each represents independently an alkyl group having 1 to 18 carbon atoms similarly in the formula (V).

Examples of the (meth)acrylic acid trialkylsilyl ester represented by the formula (VI) are (meth)acrylic acid trimethylsilyl ester, (meth)acrylic acid triethylsilyl ester, (meth)acrylic acid tripropylsilyl ester, (meth)acrylic acid triisopropylsilyl ester, (meth)acrylic acid tributylsilylester, (meth)acrylic acid triisobutylsilyl ester, (meth)acrylic acid dimethylpropylsilyl ester, (meth)acrylic acid monomethyldipropylsilyl ester, (meth)acrylic acid methylethylpropylsilyl ester. Among them, (meth)acrylic acid tripropylsilyl ester, (meth) acrylic acid triisopropylsilyl ester, (meth)acrylic acid tributylsilyl ester and (meth)acrylic acid triisobutylsilyl ester are preferred.

The other monomers (not having a trialkylsilyl group) polymerizable with the monomer having a metal salt bond represented by the formula (VI) can be appropriately selected from conventionally known polymerizable unsaturated monomers used for acrylic resins similarly in the above described metal salt bond containing acrylic resin. Preferable examples thereof are an alkyl (meth) acrylate, an alkoxy alkyl(meth)acrylate and a hydroxy alkyl(meth)acrylate, and especially preferable examples are methyl(meth)acrylate, ethyl(meth)acrylate, butyl(meth)acrylate and 2-hydroxyethyl(meth)acrylate. Moreover, it is possible to use styrene and a styrene derivative; a vinyl ester such as vinyl acetate and vinyl propionate; (meth)acrylamide and derivatives thereof; and (meth)acrylonitrile.

In the trialkylsilyl group containing acrylic resin, the properties, for example, the number average molecular weight (Mn: a value relative to polystyrene by GPC), the weight average molecular weight (Mw: a value relative to polystyrene by GPC), the molecular weight distribution (Mw/Mn), the glass transition temperature (Tg) and the viscosity can be appropriately regulated in consideration of the storage stability or coating operation properties of an antifouling coating composition or the eluting rate of an antifouling coating film. The general properties are as follows.

The number average molecular weight (Mn) is usually about 3,000 to 500,000, preferably 3,000 to 20,000, more preferably 4,000 to 15,000, especially 5,000 to 12, 000. The weight average molecular weight (Mw) is usually 4,000 to 150,000, preferably 4,000 to 60,000, more preferably 6,000 to 30,000. The molecular weight distribution (Mw/Mn) is usually 1.0 to 4.0, preferably 1.0 to 3.0, especially 1.0 to 2.5. The glass transition temperature (Tg) is usually 15 to 80°C, preferably 25 to 80°C, more preferably 30 to 70°C, especially 35 to 60°C. The viscosity (at 25°C) in a 50% xylene solution is usually 30 to 1000 CPS, preferably 40 to 600 CPS.

### <Antifouling agent>

The antifouling coating composition of the present invention at least contains the inorganic copper antifouling agent (B) such as copper suboxide, and N,N'-dimethyl-N'-tolyl-(N-fluorodichloromethylthio)sulfamide (C) as an antifouling agent.

As the inorganic copper antifouling agent (B) of the present invention, it is possible to use ones used as an antifouling component of conventionally known antifouling coating compositions. Examples thereof are an inorganic copper compound such as copper suboxide, copper thiocyanate, basic copper sulfate, copper chloride or copper oxide, and powdery copper. These inorganic copper antifouling agents may be used singly or two or more may be combined for use.

N,N'-dimethyl-N'-tolyl-(N-fluorodichloromethylthio) sulfamide used as the antifouling agent (C) is a compound represented by the following formula (VII). This antifouling agent is available as "PREVENTOL A-5S" manufactured by LANXESS CO.

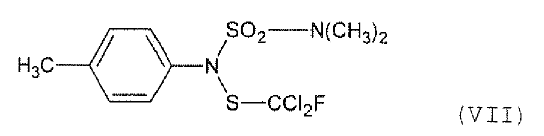

The content of the antifouling agent (B) in the antifouling coating composition of the present invention is preferably 60 to 1000 parts by weight, more preferably 65 to 900 parts by weight, especially 70 to 800 parts by weight based on 100 parts by weight of the coating film forming resin (A).

The content of the antifouling agent (C) is preferably 1.4 to 80 parts by weight, more preferably 2 to 75 parts by weight, especially 3 to 70 parts by weight based on 100 parts by weight of the coating film forming resin (A).

Moreover, concerning the proportion of the antifouling agents (B) and (C), the antifouling agent (C) is used in an amount of preferably 0.1 to 100 parts by weight, more preferably 0.5 to 80 parts by weight, especially 1.0 to 70 parts by weight based on 100 parts by weight of the antifouling agent (B).

The antifouling coating composition satisfying these conditions of the present invention depresses the amount of re-crystallized substances in a paint and has excellent antifouling properties such as slime resistance and barnacle resistance.

Although the antifouling coating composition of the present invention has excellent antifouling properties such as slime resistance and barnacle resistance because of containing the antifouling agents (B) and (C), the antifouling coating composition of the present invention may optionally contain a different antifouling agent (D) in addition to the antifouling agents (B) and (C) in order to further improve the antifouling properties or improving the effect of preventing adhesion of other organisms.

Examples of the different antifouling agent (D) usable in the present invention may include organic antifouling agents such as 2-pyridine thiol-1-oxide zinc salt (copper pyrithione), 2-pyridine thiol-1-oxide copper salt (zinc pyrithione), 4,5-dichloro-2-n-octyl-4-isothiazoline-3-on, N,N-dimethyldichlorophenyl urea, 2,4,6-trichlorophenyl maleimide, 2-methylthio-4-tert-butylamino-6-cyclopropyl-S-triadine, 2,4,5,6-tetrachloroisophthalonitrile, bisdimethyldithiocarbamoyl zinc ethylene bisdithiocarbamate, chloromethyl-n-octyl disulfide, N,N'-dimethyl-N'-phenyl-(N-fluorodichloromethylthio)sulfamide, tetra-alkylthiuram disulfide, zinc dimethyl dithiocarbamate, zincethylene bisdithiocarbamate, 2,3-dichloro-N-(2',6'-diethylphenyl)maleimide and 2,3,dichloro-N-(2'-ethyl-6'-methylphenyl)maleimide. These antifouling agents may be used singly or two or more may be combined for use.

### <Other components>

In addition to the coating film forming resin (A) and the antifouling agents (B) to (D), the antifouling coating composition of the present invention may contain various components used for general coating compositions, for example, a coloring pigment (E), an extender pigment (F), a dehydrating agent (G), a plasticizer (H) and an anti-sagging agent/anti-settling agent (I) and a solvent.

### (E) Coloring pigment

Examples of the coloring pigment capable of being mixed in the antifouling coating composition of the present invention are an inorganic pigment such as red iron oxide, barytes powder (barium sulfate), titanium white (titanium oxide), yellow iron oxide, and an organic pigment such as carbon black, naphthol red, phthalocyanine blue. Particularly, of the inorganic pigments, red iron oxide, titanium white and yellow iron oxide are preferred in the regard of coloring power, while the organic pigments are preferred in the regards that a coating film having vivid colors can be prepared and the discoloration is low. These coloring pigments may be used singly or two or more may be combined for use. Moreover, the coloring pigment may contain various coloring agents such as dye. The amount of the extender pigment may be regulated appropriately. For example, the extender pigment is added in an amount of 0.05 to 125 parts by weight based on 100 parts by weight of the coating film forming resin (A).

### (F) Extender pigment

The extender has a low refractive index and a property that when it is kneaded with oil or varnish and applied, it is transparent and does not hide the coated surface. Examples of the extender pigment capable of being mixed in the antifouling coating composition of the present invention are talc, silica, mica, clay, zinc oxide, calcium carbonate which is also used as an anti-settling agent, kaolin, alumina white, white carbon which is also used as a delustering agent, aluminum hydroxide, magnesium carbonate, barium carbonate and barium sulfate. Among them, talc, silica, mica, clay, zinc oxide, calcium carbonate, kaolin and barium sulfate are preferred. These extender pigments may be used singly or two or more may be combined for use. The amount of the extender pigment can be regulated appropriately. For example, the extender pigment is used in an amount of 2.5 to 250 parts by weight based on 100 parts by weight of the coating film forming resin (A).

### (G) Dehydrating agent

The dehydrating agent contributes to improvement of storage stability in the paint. Examples of the dehydrating agent capable of being mixed in the antifouling coating composition of the present invention are an inorganic dehydrating agent such as anhydrous gypsum, hemihydrate gypsum (calcined gypsum) and synthetic zeolite type adsorbent (Trade Name Molecular sieve, etc), an orthoester (e.g. methyl orthoformate, methyl orthoacetate and orthoborate ester), a silicate and an isocyanate. Among them, anhydrous gypsum and hemihydrate gypsum (calcined gypsum) are preferred in the inorganic dehydrating agents. These dehydrating agents may be used singly or two or more may be combined for use. The amount of the dehydrating agent can be regulated appropriately. For example, the dehydrating agent is used in an amount of 1.0 to 25 parts by weight based on 100 parts by weight of the coating film forming resin (A).

### (H) Plasticizer

The plasticizer contributes improvement of crack resistance or water resistance and control of discoloration in the antifouling coating film. Examples of the plasticizer capable of being mixed in the antifouling coating composition of the present invention are n-paraffin, chlorinated paraffin, terpene phenol, tricresyl phosphate (TCP) and polyvinylethyl ether. Among them, chlorinated paraffin and terpene phenol are preferred, and further chlorinated paraffin is particularly preferred. These plasticizers may be used singly or two or more may be combined for use. It is possible to use "n-paraffin" manufactured by Nippon Petroleum Chemical Co., Ltd as the n-paraffin, and it is possible to use "TOYOPARAX A-40/A-50/A-70/A-145/A-150" manufactured by TOSH CORPORATION as the chlorinated paraffin. The amount of the plasticizer can be regulated appropriately. For example, the plasticizer is used in an amount of 0.5 to 5 % by weight based on all the solid components of the antifouling coating composition.

### (I) Anti-sagging agent/anti-settling agent

Examples of the anti-sagging agent/anti-settling agent (thixotropic agent) usable in the present invention are an organic clay compound (e.g. amine salt, stearate salt, lecithin salt or alkyl sulfonate of Al, Ca or Zn), an organic wax (e.g. polyethylene wax, oxidized polyethylene wax, polyamide wax, amide wax or hydrogenated castor oil wax) and synthetic fine powdery silica. Among them, the organic clay compound, polyamide wax, oxidized polyethylene wax and synthetic fine powdery silica are preferred. These anti-sagging agent/anti-settling agents may be used singly or two or more may be combined for use. The amount of the anti-sagging agent/anti-settling agent can be regulated appropriately. For example, the anti-sagging agent/anti-settling agent is used in an amount of 0.25 to 50 parts by weight based on 100 parts by weight of the coating film forming resin (A).

### Solvent

The components constituting the antifouling coating composition of the present invention are dissolved or dispersed in a solvent similar to usual antifouling coating compositions. In the present invention, it is possible to use usual solvents for antifouling paints such as an aliphatic solvent, an aromatic solvent (e.g. xylene, toluene), a ketone solvent (e.g. MIBK, cyclohexanone), an ester solvent, an ether solvent (e.g. propylene glycol monomethylether, propylene glycol monomethylether acetate) or an alcohol solvent (e.g. isopropyl alcohol). The amount of the solvent can be regulated appropriately. For example, the solvent is used in an amount such that the ratio of all the solid components in the antifouling coating composition is 20 to 90 % by weight. Moreover, the solvent may be added in accordance with the operating properties at the time of application.

### Process for producing Antifouling coating composition and Use

The antifouling coating composition of the present invention can be prepared by the same device and means as those in conventionally known antifouling paints. For example, after the coating film forming resin (A) is prepared, this resin (reaction solution), and the antifouling agents (B) and (C), and optionally other additives are added to the solvent at once or one after the other, mixed with stirring to prepare the antifouling coating composition.

The antifouling coating composition of the present invention can be used in the embodiments same as those of conventionally known antifouling paints. For example, on the surface of a base material, particularly, the surface of a base material which is contact with seawater (including brackish water) or pure water at all times or intermittently such as a structure under water, a outside plate of ship, a fishing net, a fishing implement, the antifouling coating composition of the present invention is applied or immersed, and then dried for a prescribed time and thereby a cured antifouling coating film is formed on the surface of the base material. Coating the surface with the antifouling coating composition can prevent the base material from damage caused by adhesion of aquatic organisms, particularly, barnacles or slimes for a long period of time. The dried film thickness of the antifouling coating film can be regulated appropriately in consideration of consumption rate of the coating film. For example, the thickness is determined to be about 50 to 150 µm.

### EXAMPLES

The measuring methods of various physical properties in the following examples are as follows.

### <Solid component proportion>

1 g of a copolymer solution prepared was weighed in a flat bottom pan, and spread uniformly using a wire having a known mass. The copolymer solution was dried at 125°C for 1 hr. After a solvent was evaporated, the masses of a residue and the wire were measured. The solid component proportion was determined from the heated residue (namely, solid components) measured.

### <Gardner viscosity>

According to JIS K7233, 4.3, the solid component proportion of a reaction solution was regulated to 35 % by weight and then the Gardner viscosity thereof was measured at 25°C.

### <Mn, Mw>

The number average molecular weight (Mn) and the weight average molecular weight (Mw) were measured as a value relative to polystyrene by GPC using "HLC-8120GPC" manufactured by Tosoh Corporation as a measuring device, two separation columns "TSKgel α-M" manufactured by Tosoh Corporation, and dimethyl formamide in which 20 mM of LiBr was added, as an eluate.

### <Glass transition temperature (Tg) of Resin>

Using a Shimazu differential scanning calorimeter DSC-60 manufactured by Shimazu Co., Ltd, the glass transition temperature was measured by increasing the temperature from -30°C to 120°C at a rate of 5°C/min and the intermediate point of inflection points was taken as Tg.

### Preparation Example 1: Preparation of metal containing monomer (a)

To four necked flask equipped with a cooler, a thermometer, a dropping funnel and a stirrer, 85.4 parts by weight of propylene glycol monomethylether (PGM) and 40.7 parts by weight of zinc oxide were fed and the temperature was elevated to 75°C while stirring them. Successively, a mixture composed of 43.1 parts by weight of methacrylic acid (MAA), 36.1 parts by weight of acrylic acid (AA) and 5 parts by weight of water was dropped at a uniform rate using a dropping funnel over 3 hr. After the completion of dropping, the reaction solution became transparent from a milk-white condition. After the mixture was stirred for additional two hr, 6.7 parts by weight of n-butanol and 29.2 parts by weight of xylene were added to prepare a reaction solution of a metal containing monomer (a) having a solid component proportion of 44.9 % by weight. The components for dropping and the properties of the product concerning the preparation example 1 are shown in Table 1.

**Table 1 Components for dropping and Properties of Product concerning Preparation Example 1 (Metal containing monomer a)**

| Preparation Example 1 | Amount (molar ratio) | | | | Content of volatile components in reaction solution of metal containing monomer (%) | | | | Solid component (%) |
|---|---|---|---|---|---|---|---|---|---|
| | MAA | AA | ZnO | Water | PGM | N-BuOH | Xylene | Water | |
| Metal containing monomer (a) | 0.5 | 0.5 | 0.5 | 0.27 | 34.8 | 2.7 | 11.9 | 5.7 | 44.9 |

### Production Example 1: Production of Copolymer A

To four necked flask equipped with a cooler, a thermometer, a dropping funnel and a stirrer, 15 parts by weight of propylene glycol monomethylether, 57 parts by weight of xylene and 4 parts by weight of ethylacrylate were fed and the temperature was elevated to 100°C while stirring them. Successively, a transparent mixture composed of 37.8 parts by weight of the reaction solution prepared in the preparation step of the metal containing monomer (a) in Preparation Example 1, 13 parts by weight of methyl methacrylate, 65 parts by weight of ethyl acrylate, 2.5 parts by weight of azobisisobutylonitrile (AIBN) manufactured by Japan Hydrazine Company, Inc., 7 parts by weight of azobismethylbutylonitrile manufactured by Japan Hydrazine Company, Inc., 1 part by weight of "NOFMER MSD" manufactured by NOF Corporation as a chain transfer agent and 10 parts by weight of xylene was dropped at a uniform rate using a dropping funnel over 6 hr. After the completion of dropping, 0.5 part by weight of t-butyl peroctoate (TBPO) and 7 parts by weight of xylene were dropped over 30 min, and stirred for 1 hr 30 min. Thereafter, 4.4 parts by weight of xylene was added and thereby a pale yellow transparent reaction solution of a metal salt bond containing copolymer A in which there was no insoluble component was prepared. The reaction solution had a solid component proportion of 46.2 % by weight and a Gardner viscosity of +Y. Furthermore, the resulting metal salt bond containing copolymer A had a number average molecular weight (Mn) of 2200 and a weight average molecular weight (Mw) of 5600. The components for dropping and the properties of the product concerning Production Example 1 are shown in Table 2.

**Table 2 Components for dropping and Properties of Product concerning Production Example 1 (Copolymer A)**

| Components for dropping [part by weight] | | Production Example 1 Copolymer A |
|---|---|---|
| Reaction solution of Metal containing monomer (a) (Preparation Example 1) | | 37.8 |
| Other unsaturated monomer | Methyl methacrylate | 13 |
| | Ethyl acrylate | 65 |
| Polymerization initiator | Azobisisobutylonitrile | 2.5 |
| | Azobismethylbutylonitrile | 7 |
| | t-butyl peroctoate | 0.5 |
| Chain transfer agent | NOFMER-MSD | 1 |
| Properties of Product | Solid components [wt%] | 46.2 |
| | Gardner viscosity | +Y |
| | Number average molecular weight (Mn) | 2200 |
| | Weight average molecular weight (Mw) | 5600 |

### Production Example 2: Production of Copolymer B

To four necked flask equipped with a cooler, a thermometer, a dropping funnel and a stirrer, 30 parts by weight of propylene glycol monomethylether (PGM) and 40 parts by weight of xylene were fed and the temperature was elevated to 100°C while stirring them. Successively, a mixture composed of 35 parts by weight of versatic acid zinc methacrylate, 10 parts by weight of 2-methoxyethylacrylate, 30 parts by weight of 3-methoxybutylacrylate, 25 parts by weight of ethylacrylate and 6 parts by weight of t-butyl peroxide was dropped at a uniform rate using a dropping funnel over 3 hr. After the completion of dropping, 1 part by weight of t-butyl peroctoate, as an additional catalyst, and 10 parts by weight of xylene were dropped over 2 hr, and stirred for 2 hr. Thereafter, 20 parts by weight of xylene was added and thereby a reaction solution of a metal salt bond containing copolymer B was prepared. The reaction solution had a solid component proportion of 50.5 % by weight and a Gardner viscosity of +Z. The components for dropping and the properties of the product concerning Production Example 2 are shown in Table 3.

**Table 3 Components for dropping and Properties of Product concerning Production Example 2 (Copolymer B)**

| Components for dropping [part by weight] | | Production Example 2 Copolymer B |
|---|---|---|
| Metal containing monomer | Versatic acid zinc methacrylate | 35 |
| Unsaturated monomer | 2-methoxyethyl acrylate | 10 |
| | 3-methoxybutyl acrylate | 30 |
| | Ethyl acrylate | 25 |
| Polymerization initiator | t-butyl peroxide | 6 |
| Properties of Product | Solid components [wt%] | 50.5 |
| | Gardner viscosity | +Z |

### Production Example 3: Production of Copolymer C

To reaction vessel equipped with a stirrer, a condenser, a thermometer, a dropping funnel and a heating/cooling jacket, 100 parts by weight of xylene was fed and heated to 83°C under a nitrogen stream with stirring. Successively, while maintaining the same temperature, a mixture composed of 60 parts by weight of triisopropylsilyl acrylate, 39.5 parts by weight of methylmethacrylate, 0.5 part by weight of ethylacrylate, and 1.0 part by weight of 2,2'-azobisisobutylonitrile was dropped into the reactor at a uniform rate using a dropping funnel over 4 hr. Thereafter, the stirring was continued at the same temperature for 4 hr and thereby a colorless transparent reaction solution of a copolymer C was prepared. The reaction solution had a solid component proportion of 49.7 % by weight and a viscosity of 160 CPS (25°C). The resulting copolymer C had a number average molecular weight (Mn) of 6800, a weight average molecular weight (Mw) of 24500, a molecular weight distribution (Mw/Mn) of 3.6 and a glass transition temperature (Tg) of 45°C. The components for dropping and the properties of the product concerning Production Example 3 are shown in Table 4.

**Table 4 Components for dropping and Properties of Product concerning Production Example 3 (Copolymer C)**

| Components for dropping [part by weight] | | Production Example 3 Copolymer C |
|---|---|---|
| Triisopropylsilyl acrylate | | 60 |
| Other unsaturated monomer | Methyl methacrylate | 39.5 |
| | Ethyl acrylate | 0.5 |
| Polymerization initiator | 2,2'-azobisisobutylonitrile | 1.0 |
| Polymerization temperature [°C] | | 83 |
| Properties of Product | Solid components [wt%] | 49.7 |
| | Viscosity/ 25°C [CPS] | 160 |
| | Number average molecular weight (Mn) | 6800 |
| | Weight average molecular weight (Mw) | 24500 |
| | Molecular weight distribution (Mw/Mn) | 3.6 |
| | Glass transition temperature (Tg) [°C] | 45 |

### Examples 1 to 27

### Preparation of Antifouling Coating Composition

In each example, the copolymers A, B and C prepared in Production Examples 1 to 3, antifouling agents (B) and (C) and other components were blended in the blending composition as shown in Table 5 (the unit of the amount in the table is represented by parts by weight), and mixed using a stirrer in accordance with a known method, and thereby each antifouling coating composition was prepared.

### Test for recrystallization properties of Antifouling agent

200 g of the antifouling coating composition prepared in each of the above examples was dispensed and stored in an incubator set at 5°C for 1 month. Thereafter, the coating composition was stirred and the recrystallization properties were evaluated visually in such a way that a recrystallized substance of the antifouling agent was generated or not during the storage. The results are shown in Table 5.

### < Evaluation criteria for Recrystallization properties>

AA ... No crystallization was observed visually.
BB ... Recrystallization was observed visually.
CC ... Recrystallization was observed all over (in a large amount) visually.

### Test for Antifouling properties of Antifouling coating film after immersion

To a sandblast treated steel plate (length 300 mm x width 100 mm x thickness 3.2 mm), an epoxy rust preventive paint (epoxy AC paint, Trade Name "BANNOH 500" manufactured by Chugoku Marine Paints, Ltd.) was applied in an amount such that the dried film thickness was 150 µm, and then an epoxy binder paint (Trade Name "BANNOH 500N" manufactured by Chugoku Marine Paints, Ltd.) was applied in an amount such that the dried film thickness was 100 µm. Successively, the antifouling coating composition prepared in the above example was applied once in an amount such that the dried film thickness was 150 µm, and dried at room temperature for 7 days to prepare an antifouling coating film-having test plate. Each of the above three applications was carried out by 1 day / 1 coat.

The test plate thus prepared was immersed and allowed to stand in Nagasaki Bay in Nagasaki Prefecture for 4 months. During the immersion thereof, the area (%) where slims (diatom membranes) adhered was measured each month. According the following criteria, the antifouling properties of the antifouling coating film after immersion were evaluated. The results are shown in Table 5.

### <Evaluation criteria for antifouling properties after immersion by the area where slimes adhered>

Grade 0 ... The slime adhered area is about 100%.
Grade 1 ... The slime adhered area is about 90%.
Grade 2 ... The slime adhered area is about 80%.
Grade 3 ... The slime adhered area is about 70%.
Grade 4 ... The slime adhered area is about 60%.
Grade 5 ... The slime adhered area is about 50%.
Grade 6 ... The slime adhered area is about 40%.
Grade 7 ... The slime adhered area is about 30%.
Grade 8 ... The slime adhered area is about 20%.
Grade 9 ... The slime adhered area is about 10%.
Grade 10 ... There is no slime adhered area.

### Comparative examples 1 to 18

In each example, the procedure of the above example was repeated except that the blending composition was changed to those as shown in Table 6 (the unit of the blended amount in the table is represented by part by weight), to prepare an antifouling coating composition in each of Comparative Examples 1 to 18. Furthermore, the antifouling coating composition was subjected to the recrystallization test and the antifouling property test after immersion in the same manner as in the above example. The results are shown in Table 6.

### <Components and Trade names described in Table 5 and Table 6>

Coating film forming resin (A)/Copolymer A:
Referred to Production Example 1.

Coating film forming resin (A)/Copolymer B:
Referred to Production Example 2.

Coating film forming resin (A)/Copolymer C:
Referred to Production Example 3.

Coating film forming resin (A)/Vinyl chloride-vinyl isobutylether copolymer C:
Trade Name "Laroflex MP-25" manufactured by BASF. The solid component content is 100 % by weight.

Coating film forming resin (A)/ Acryl resin:
Trade Name "TZ-343" manufactured by DIC Corporation which is a copolymer of MMA and BMA. The solid component content is 45 % by weight.

Rosin:
Rosin WW grade (made in China). The solid component content is 100 % by weight. The rosin is dissolved in a 50% xylene solution and used.
Triphenyl isobutenyl cyclohexene carboxylic acid:
Trade Name "A-3000X" manufactured by Yasuhara Chemical Co. , Ltd.

Versatic acid:
Trade Name "Versatic 10" manufactured by Nippon Epoxy Resin Co., Ltd.

Antifouling agent (B)/Copper suboxide:
Trade Name "C-301" manufactured by NC Tech Co., Ltd. Antifouling agent (B)/Copper thiocyanate:
Trade Name "Rhodan copper" manufactured by Bardyke Chemicals Ltd.
   Antifouling agent (C)/N,N'-dimethyl-N'-tolyl-(N-fluorodichloromethylthio)sulfamide:
Trade Name "Preventol A-5S" manufactured by Lanxess.

Antifouling agent (D)/4,5-dichloro-2-n-octyl-4-isothiazoline-3-on:
Trade Name "Sea-Nine 211" manufactured by Rhome and Harth Co. The solid component content is 30 % by weight.

Antifouling agent (D)/2-pyridine thiol-1-oxide copper salt:
Trade Name "TOMICIDE CPT" manufactured by Yoshitomi Fine Chemical Co., Ltd.

Antifouling agent (D)/N,N'-dimethyl-N'-phenyl-(N-fluorodichloromethylthio)sulfamide:
Trade Name "Preventol A-4S" manufactured by Lanxess.

Antifouling agent (D)/2,4,6-trichlorophenyl maleimide:
Trade Name "IT-354" manufactured by K.I. Chemical Industry Co., Ltd.

Antifouling agent (D)/2,3,5,6-tetrachloro-4-(methylsulfonyl) pyridine:
Trade Name "Densyl S-100" manufactured by I.C.I. Japan.

Coloring pigment (E)/Titanium white:
Trade Name "R-5N" manufactured by Sakai Chemical Industry Co., Ltd.

Coloring pigment (E)/Naphtol red:
Trade Name "Naphtol red B7032C" manufactured by Cappelle Co.
Extender pigment (F)/Zinc oxide:
Trade Name " Zinc white No.3" manufactured by Hakusuitech Ltd.

Inorganic dehydrating agent (G)/ Calcined gypsum:
Trade Name "FT-2" manufactured by Noritake Gypsum Co.

Plasticizer (H) / Chlorinated paraffin:
Trade Name "TOYOPARAX A-150" manufactured by TOSH Co. The average carbon number is 14.5, the chlorine content (amount) is 50%, the viscosity is 12 poises at 25°C and the specific gravity is 1.25 at 25°C.

Antisettling agent (I)/ Oxidized polyethylene wax:
Trade Name "Disparlon 4200-20" manufactured by Kusumoto Chemicals Ltd. Xylene paste, the solid content is 20 %.

Antisettling agent (I)/ Aliphatic acid amide wax:
Trade Name "Disparlon A630-20X" manufactured by Kusumoto Chemicals Ltd. Xylene paste, the solid content is 20 %.

Solvent/ Propylene glycol monomethylether:
Trade Name "Kuraray PGM" manufactured by Kuraray Co. , Ltd.

**Table 5-1**

| Trade name | Component | | Example | | | | | | | | |
|---|---|---|---|---|---|---|---|---|---|---|---|
| | | | 1 | 2 | 3 | 4 | 5 | 6 | 7 | 8 | 9 |
| | Copolymer A (solid content 50%) | | 30.0 | 30.0 | 30.0 | 30.0 | - | - | - | - | - |
| | Copolymer B (solid content 50.5%) | | - | - | - | - | 30.0 | 30.0 | 30.0 | 30.0 | - |
| | Copolymer C (solid content 49.7%) | | - | - | - | - | - | - | - | - | 30.0 |
| WWrosin-xylene 50% solution | Rosin (solid component 50%) | | - | - | - | - | - | - | - | - | - |
| A-3000X | Triphenylisobutenyl cyclohexene carboxylic acid | | - | - | - | - | - | - | - | - | - |
| Versatic10 | Versatic acid | | - | - | - | - | - | - | - | - | - |
| LaroflexNP-25 | Vinyl chloride-vinyl isobutylether copolymer | | - | - | - | - | - | - | - | - | - |
| TZ343 | Acryl resin (solid content 45%) | | - | - | - | - | - | - | - | - | - |
| TOYOPARAX 150 | Chlorinated paraffin | | 1.0 | 1.0 | 1.0 | 1.0 | 1.0 | 1.0 | 1.0 | 1.0 | 1.0 |
| ZnO No.3 | Zinc oxide | | 5.0 | 5.0 | 5.0 | 5.0 | 5.0 | 5.0 | 5.0 | 5.0 | 5.0 |
| FT-2 | calcined gypsum | | 1.0 | 1.0 | 1.0 | 1.0 | 1.0 | 1.0 | 1.0 | 1.0 | 1.0 |
| TiO2 R-5N titanium white | | | 1.0 | 1.0 | 1.0 | 1.0 | 1.0 | 1.0 | 1.0 | 1.0 | 1.0 |
| Naphthol red B7032C Naphthol red | | | 2.0 | 2.0 | 2.0 | 2.0 | 2.0 | 2.0 | 2.0 | 2.0 | 2.0 |
| NC301 | Copper suboxide | | 40.0 | 40.0 | 40.0 | 40.0 | 40.0 | 40.0 | 40.0 | 40.0 | 40.0 |
| Copper rhodanide | Copper thiocyanate | | - | - | - | - | - | - | - | - | - |
| PreventolA-5S | thio) sulfide N,N'-dimethyl-N'-tolyl-(N-fluorodichloromethyl | | 2.5 | 5.0 | 2.5 | 2.5 | 2.5 | 5.0 | 2.5 | 2.5 | 2.5 |
| Sea-Nine211 | (solid content 30%) 4,5-dichloro-2-n-octyl-isothiazoline-3-on | | - | - | - | 2.5 | - | - | - | 2.5 | - |
| Copper pyrithione | 2-pyridine thiol-1-oxide copper salt | | - | - | 20.5 | - | - | - | 2.5 | - | - |
| Disparlon 4200-20 | Oxidized polyethylene wax (solid content 20%) | | 2.0 | 2.0 | 2.0 | 2.0 | 2.0 | 2.0 | 2.0 | 2.0 | 2.0 |
| Disparlon A630-20X | Aliphatic acid amide wax (solid content 20%) | | 2.5 | 2.5 | 2.5 | 2.5 | 2.5 | 2.5 | 2.5 | 2.5 | 2.5 |
| Xylene | Xylene | | 10.0 | 7.5 | 7.5 | 7.5 | 10.0 | 7.5 | 7.5 | 7.5 | 10.0 |
| Kuraray PGM | Propylene glycol monomethyl ether | | 3.0 | 3.0 | 3.0 | 3.0 | 3.0 | 3.0 | 3.0 | 3.0 | 3.0 |
| Total wt part | | | 100.0 | 100.0 | 100.0 | 100.0 | 100.0 | 100.0 | 100.0 | 100.0 | 100.0 |
| | Re-crystallization | After storage at 5°C for 1 month | AA | AA | AA | AA | AA | AA | AA | AA | AA |
| | Slime resistance | immersed in seawater for 1 month | 10 | 10 | 10 | 10 | 10 | 10 | 10 | 10 | 10 |
| | | immersed in seawater for 2 months | 10 | 10 | 10 | 10 | 10 | 10 | 10 | 10 | 10 |
| | | immersed in seawater for 3 months | 10 | 10 | 10 | 10 | 10 | 10 | 10 | 10 | 10 |
| | | immersed in seawater for 4 months | 10 | 10 | 10 | 10 | 10 | 10 | 10 | 10 | 10 |

**Table 5-2**

| Trade name | Component | | Example | | | | | | | | |
|---|---|---|---|---|---|---|---|---|---|---|---|
| | | | 10 | 11 | 12 | 13 | 14 | 15 | 16 | 17 | 18 |
| | Copolymer A (solid content 50%) | | - | - | - | 15.0 | - | - | - | - | - |
| | Copolymer B (solid content 50.5%) | | - | - | - | - | 15.0 | - | - | - | - |
| | Copolymer C (solid content 49.7%) | | 30.0 | 30.0 | 30.0 | - | - | 12.0 | 12.0 | 12.0 | - |
| WWrosin-xylene 50% solution | Rosin (solid component 50%) | | - | - | - | 7.5 | 7.5 | 3.0 | - | - | 10.0 |
| | A-3000X Triphenylisobutenyl cyclohexene carboxylic acid | | - | - | - | - | - | - | 6.0 | - | - |
| Versatic10 Versatic acid | | | - | - | - | - | - | - | - | 3.0 | - |
| LaroflexNP-25 | Vinyl chloride-vinyl isobutylether copolymer | | - | - | - | - | - | - | - | - | 5.0 |
| TZ343 | Acryl resin (solid content 45%) | | - | - | - | - | - | - | - | - | - |
| TOYOPARAX 150 | Chlorinated paraffin | | 1.0 | 1.0 | 1.0 | 1.0 | 1.0 | 1.0 | 1.0 | 1.0 | 1.0 |
| ZnO No.3 | Zinc oxide | | 5.0 | 5.0 | 5.0 | 5.0 | 5.0 | 5.0 | 5.0 | 5.0 | 5.0 |
| FT-2 | calcined gypsum | | 1.0 | 1.0 | 1.0 | 1.0 | 1.0 | 1.0 | 1.0 | 1.0 | 1.0 |
| TiO2 R-5N | titanium white | | 1.0 | 1.0 | 1.0 | 1.0 | 1.0 | 1.0 | 1.0 | 1.0 | 1.0 |
| Naphthol red B7032C | Naphthol red | | 2.0 | 2.0 | 2.0 | 2.0 | 2.0 | 2.0 | 2.0 | 2.0 | 2.0 |
| NC301 | Copper suboxide | | 40.0 | 40.0 | 40.0 | 40.0 | 40.0 | 40.0 | 40.0 | 40.0 | 40.0 |
| Copper rhodanate | Copper thiocyanate | | - | - | - | - | - | - | - | - | - |
| PreventolA-5S | N,N'-dimethyl-N'-tolyl-(N-fluorodichloromethyl thio) sulfide | | 5.0 | 2.5 | 2.5 | 2.5 | 2.5 | 2.5 | 2.5 | 2.5 | 2.5 |
| Sea-Nine211 | 4,5-dichloro-2-n-octyl-isothiazoline-3-on (solid content 30%) | | - | - | 2.5 | - | - | - | - | - | - |
| Copper pyrithione | 2-pyridine thiol-1-oxide copper salt | | - | 2.5 | - | - | - | - | - | - | - |
| Disparlon 4200-20 | Oxidized polyethylene wax (solid content 20%) | | 2.0 | 2.0 | 2.0 | 2.0 | 2.0 | 2.0 | 2.0 | 2.0 | 2.0 |
| Disparlon A630-20X | Aliphatic acid amide wax (solid content 20%) | | 2.5 | 2.5 | 2.5 | 2.5 | 2.5 | 2.5 | 2.5 | 2.5 | 2.5 |
| Xylene | Xylene | | 7.5 | 7.5 | 7.5 | 17.5 | 17.5 | 25.0 | 22.0 | 25.0 | 25.0 |
| Kuraray PGM | Propylene glycol monomethyl ether | | 3.0 | 3.0 | 3.0 | 3.0 | 3.0 | 3.0 | 3.0 | 3.0 | 3.0 |
| Total wt part | | | 100.0 | 100.0 | 100.0 | 100.0 | 100.0 | 100.0 | 100.0 | 100.0 | 100.0 |
| | Re-crystallization | After storage at 5°C for 1 month | AA | AA | AA | AA | AA | AA | AA | AA | AA |
| | Slime resistance | immersed in seawater for 1 month | 10 | 10 | 10 | 10 | 10 | 10 | 10 | 10 | 10 |
| | | immersed in seawater for 2 months | 10 | 10 | 10 | 10 | 10 | 10 | 10 | 10 | 8 |
| | | immersed in seawater for 3 months | 10 | 10 | 10 | 10 | 10 | 10 | 10 | 10 | 8 |
| | | immersed in seawater for 4 months | 10 | 10 | 10 | 10 | 10 | 10 | 10 | 10 | 8 |

**Table 5-3**

| Trade name | Component | | Example | | | | | | | | |
|---|---|---|---|---|---|---|---|---|---|---|---|
| | | | 19 | 20 | 21 | 22 | 23 | 24 | 25 | 26 | 27 |
| | Copolymer A (solid content 50%) | | - | - | - | - | - | - | - | - | - |
| | Copolymer B (solid content 50.5%) | | - | - | - | - | - | - | - | - | - |
| | Copolymer C (solid content 49.7%) | | - | - | - | - | - | - | - | - | - |
| WWrosin-xylene 50% solution | Rosin (solid component 50%) | | 10.0 | 10.0 | 10.0 | 10.0 | 10.0 | 10.0 | 10.0 | 10.0 | 10.0 |
| A-3000X | Triphenylisobutenyl cyclohexene carboxylic acid | | - | - | - | - | - | - | - | - | - |
| Versatic10 | Versatic acid | | - | - | - | - | - | - | - | - | - |
| LaroflexNP-25 | Vinyl chloride-vinyl isobutylether copolymer | | 5.0 | 5.0 | 5.0 | - | - | - | - | 5.0 | 5.0 |
| TZ343 | Acryl resin (solid content 45%) | | - | - | - | 11.0 | 11.0 | 11.0 | 11.0 | - | - |
| TOYOPARAX 150 | Chlorinated paraffin | | 1.0 | 1.0 | 1.0 | 1.0 | 1.0 | 1.0 | 1.0 | 1.0 | 1.0 |
| ZnO No.3 | Zinc oxide | | 5.0 | 5.0 | 5.0 | 5.0 | 5.0 | 5.0 | 5.0 | 10.0 | 10.0 |
| FT-2 | calcined gypsum | | 1.0 | 1.0 | 1.0 | 1.0 | 1.0 | 1.0 | 1.0 | 1.0 | 1.0 |
| TiO2 R-5N | titanium white | | 1.0 | 1.0 | 1.0 | 1.0 | 1.0 | 1.0 | 1.0 | 1.0 | 1.0 |
| Naphthol red B7032C | Naphthol red | | 2.0 | 2.0 | 2.0 | 2.0 | 2.0 | 2.0 | 2.0 | 2.0 | 2.0 |
| NC301 | Copper suboxide | | 40.0 | 40.0 | 40.0 | 40.0 | 40.0 | 40.0 | 40.0 | - | - |
| Copper rhodanate | Copper thiocyanate | | - | - | - | - | - | - | - | 35.0 | 35.0 |
| PreventolA-5S | N,N'-dimethyl-N'-tolyl-(N-fluorodichloromethyl thio)sulfide | | 5.0 | 2.5 | 2.5 | 2.5 | 5.0 | 2.5 | 2.5 | 5.0 | 2.5 |
| Sea-Nine211 | 4,5-dichloro-2-n-octyl-isothiazoline-3-on (solid content 30%) | | - | 2.5 | - | - | - | 2.5 | - | - | 2.5 |
| Copper pyrithione | 2-pyridine thiol-1-oxide copper salt | | - | - | 2.5 | - | - | - | 2.5 | - | - |
| Disparlon 4200-20 | Oxidized polyethylene wax (solid content 20%) | | 2.0 | 2.0 | 2.0 | 2.0 | 2.0 | 2.0 | 2.0 | 2.0 | 2.0 |
| Disparlon A630-20X | Aliphatic acid amide wax (solid content 20%) | | 2.5 | 2.5 | 2.5 | 2.5 | 2.5 | 2.5 | 2.5 | 2.5 | 2.5 |
| Xylene | Xylene | | 22.5 | 22.5 | 22.5 | 19.0 | 16.5 | 16.5 | 16.5 | 22.5 | 22.5 |
| Kuraray PGM | Propylene glycol monomethyl ether | | 3.0 | 3.0 | 3.0 | 3.0 | 3.0 | 3.0 | 3.0 | 3.0 | 3.0 |
| Total wt part | | | 100.0 | 100.0 | 100.0 | 100.0 | 100.0 | 100.0 | 100.0 | 100.0 | 100.0 |
| | Re-crystallization | After storage at 5°C for 1 month | AA | AA | AA | AA | AA | AA | AA | AA | AA |
| | Slime resistance | immersed in seawater for 1 month | 10 | 10 | 10 | 10 | 10 | 10 | 10 | 9 | 9 |
| | | immersed in seawater for 2 months | 9 | 9 | 9 | 8 | 9 | 9 | 9 | 9 | 9 |
| | | immersed in seawater for 3 months | 9 | 8 | 8 | 8 | 9 | 8 | 8 | 9 | 8 |
| | | immersed in seawater for 4 months | 9 | 8 | 8 | 8 | 9 | 8 | 8 | 9 | 8 |

**Table 6-1**

| Trade name | Component | | Comparative Example | | | | | | | | |
|---|---|---|---|---|---|---|---|---|---|---|---|
| | | | 1 | 2 | 3 | 4 | 5 | 6 | 7 | 8 | 9 |
| | Copolymer A (solid content 50%) | | 30.0 | 30.0 | 30.0 | 30.0 | 30.0 | 30.0 | - | - | 15.0 |
| | Copolymer B (solid content 50.5%) | | - | - | - | - | - | - | 30.0 | - | - |
| | Copolymer C (solid content 49.7%) | | - | - | - | - | - | - | - | 30.0 | - |
| WWrosin-xylene 50% solution | Rosin (solid component 50%) | | - | - | - | - | - | - | - | - | 7.5 |
| A-3000X | Triphenylisobutenyl cyclohexene carboxylic acid | | - | - | - | - | - | - | - | - | - |
| Versatic10 | Versatic acid | | - | - | - | - | - | - | - | - | - |
| LaroflexNP-25 | Vinyl chloride-vinyl isobutylether copolymer | | - | - | - | - | - | - | - | - | - |
| TZ343 | Acryl resin (solid content 45%) | | - | - | - | - | - | - | - | - | - |
| TOYOPARAX 150 | Chlorinated paraffin | | 1.0 | 1.0 | 1.0 | 1.0 | 1.0 | 1.0 | 1.0 | 1.0 | 1.0 |
| ZnO No.3 | Zinc oxide | | 5.0 | 5.0 | 5.0 | 5.0 | 5.0 | 5.0 | 5.0 | 5.0 | 5.0 |
| FT-2 | calcined gypsum | | 1.0 | 1.0 | 1.0 | 1.0 | 1.0 | 1.0 | 1.0 | 1.0 | 1.0 |
| TiO2 R-5N | titanium white | | 1.0 | 1.0 | 1.0 | 1.0 | 1.0 | 1.0 | 1.0 | 1.0 | 1.0 |
| Naphthol red B7032C | Naphthol red | | 2.0 | 2.0 | 2.0 | 2.0 | 2.0 | 2.0 | 2.0 | 2.0 | 2.0 |
| NC301 | Copper suboxide | | 40.0 | 40.0 | 40.0 | 40.0 | 40.0 | 40.0 | 40.0 | 40.0 | 40.0 |
| Copper rhodanate | Copper thiocyanate | | - | - | - | - | - | - | - | - | - |
| PreventolA-5S | N,N'-dimethyl-N'-tolyl-(N-fluorodichloromethyl thio) sulfide | | - | - | - | - | - | - | - | - | - |
| PreventolA-4S | N,N'-dimethyl-N'-phenyl-(N-fluorodichloromethy lthio)sulfide | | 2.5 | 5.0 | - | - | - | - | | 5.0 | 5.0 |
| IT-354 | 2,4, 6-trichlorophenylmaleimide | | - | - | 2.5 | 5.0 | - | - | - | - | - |
| Densil S100 | 2,3.4.6-tetrachloro-4-(methylsulfonyl)pyridine | | - | - | - | - | - | - | - | - | - |
| Sea-Nine211 | 4,5-dichloro-2-n-octyl-isothiazoline-3-on (solid content 30%) | | - | - | - | - | - | - | - | - | - |
| Copper pyrithione | 2-pyridine thiol-1-oxide copper salt | | - | - | - | - | - | - | - | - | - |
| Disparlon 4200-20 | Oxidized polyethylene wax (solid content 20%) | | 2.0 | 2.0 | 2.0 | 2.0 | 2.0 | 2.0 | 2.0 | 2.0 | 2.0 |
| Disparlon A630-20X | Aliphatic acid amide wax (solid content 20%) | | 2.5 | 2.5 | 2.5 | 2.5 | 2.5 | 2.5 | 2.5 | 2.5 | 2.5 |
| Xylene | Xylene | | 10.0 | 7.5 | 10.0 | 7.5 | 10.0 | 7.5 | 7.5 | 7.5 | 15.0 |
| Kuraray PGM | Propylene glycol monomethyl ether | | 3.0 | 3.0 | 3.0 | 3.0 | 3.0 | 3.0 | 3.0 | 3.0 | 3.0 |
| Total wt part | | | 100.0 | 100.0 | 100.0 | 100.0 | 100.0 | 100.0 | 100.0 | 100.0 | 100.0 |
| | Re-crystallization | After storage at 5°C for 1 month | BB | CC | BB | CC | BB | CC | CC | CC | CC |
| | Slime resistance | immersed in seawater for 1 month | 7 | 8 | 7 | 8 | 7 | 8 | 8 | 8 | 8 |
| | | immersed in seawater for 2 months | 6 | 7 | 6 | 8 | 6 | 7 | 7 | 6 | 6 |
| | | immersed in seawater for 3 months | 5 | 6 | 3 | 7 | 5 | 4 | 6 | 5 | 6 |
| | | immersed in seawater for 4 months | 5 | 6 | 3 | 7 | 5 | 4 | 5 | 5 | 6 |

**Table 6-2**

| Trade name | Component | | Comparative Example | | | | | | | | |
|---|---|---|---|---|---|---|---|---|---|---|---|
| | | | 10 | 11 | 12 | 13 | 14 | 15 | 16 | 17 | 18 |
| | Copolymer A (solid content 50%) | | - | - | - | - | - | - | - | - | - |
| | Copolymer B (solid content 50.5%) | | 15.0 | - | - | - | - | - | - | - | - |
| | Copolymer C (solid content 49.7%) | | - | 12.0 | - | - | - | - | - | - | - |
| WWrosin-xylene 50% solution | Rosin (solid component 50%) | | 7.5 | 3.0 | 10.0 | 10.0 | 10.0 | 10.0 | 10.0 | 10.0 | 10.0 |
| A-3000X | Triphenylisobutenyl cyclohexene carboxylic acid | | - | - | - | - | - | - | - | - | - |
| Versatic10 | Versatic acid | | - | - | - | - | - | - | - | - | - |
| LaroflexNP-25 | Vinyl chloride-vinyl isobutylether copolymer | | - | - | 5.0 | 5.0 | 5.0 | - | - | - | 5.0 |
| TZ343 | Acryl resin (solid content 45%) | | - | - | - | - | - | 11.0 | 11.0 | 11.0 | - |
| TOYOPARAX 150 | Chlorinated paraffin | | 1.0 | 1.0 | 1.0 | 1.0 | 1.0 | 1.0 | 1.0 | 1.0 | 1.0 |
| ZnO No.3 | Zinc oxide | | 5.0 | 5.0 | 5.0 | 5.0 | 5.0 | 5.0 | 5.0 | 5.0 | 10.0 |
| FT-2 | calcined gypsum | | 1.0 | 1.0 | 1.0 | 1.0 | 1.0 | 1.0 | 1.0 | 1.0 | 1.0 |
| TiO2 R-5N | titanium white | | 1.0 | 1.0 | 1.0 | 1.0 | 1.0 | 1.0 | 1.0 | 1.0 | 1.0 |
| Naphthol red B7032C | Naphthol red | | 2.0 | 2.0 | 2.0 | 2.0 | 2.0 | 2.0 | 2.0 | 2.0 | 2.0 |
| NC301 | Copper suboxide | | 40.0 | 40.0 | 40.0 | 40.0 | 40.0 | 40.0 | 40.0 | 40.0 - | |
| Copper rhodanate | Copper thiocyanate | | - | - | - | - | - | - | - | 35.0 | - |
| PreventolA-5S | N,N'-dimethyl-N'-tolyl-(N-fluorodichloromethyl thio) sulfide | | - | - | - | - | - | - | - | - | - |
| PreventolA-4S | N,N'-dimethyl-N'-phenyl-(N-fluorodichloromethy lthio)sulfide | | 5.0 | 5.0 | 5.0 | - | - | 5.0 | - | - | 5.0 |
| IT-354 | 2,4,6-trichlorophenylmaleimide | | - | - | - | 5.0 | - | - | 5.0 | - | - |
| Densil S100 | 2,3.5.6-tetrachloro-4-(methylsulfonyl)pyridine | | - | - | - | - | 5.0 | - | - | 5.0 | - |
| Sea-Nine211 | 4,5-dichloro-2-n-octyl-isothiazoline-3-on (solid content 30%) | | - | - | - | - | - | - | - | - | - |
| Copper pyrithione | 2-pyridine thiol-1-oxide copper salt | | - | - | - | - | - | - | - | - | - |
| Disparlon 4200-20 | Oxidized polyethylene wax (solid content 20%) | | 2.0 | 2.0 | 2.0 | 2.0 | 2.0 | 2.0 | 2.0 | 2.0 | 2.0 |
| Disparlon A630-20X | Aliphatic acid amide wax (solid content 20%) | | 2.5 | 2.5 | 2.5 | 2.5 | 2.5 | 2.5 | 2.5 | 2.5 | 2.5 |
| Xylene | Xylene | | 15.0 | 22.5 | 22.5 | 22.5 | 22.5 | 16.5 | 16.5 | 16.5 | 22.5 |
| Kuraray PGM | Propylene glycol monomethyl ether | | 3.0 | 3.0 | 3.0 | 3.0 | 3.0 | 3.0 | 3.0 | 3.0 | 3.0 |
| Total wt part | | | 100.0 | 100.0 | 100.0 | 100.0 | 100.0 | 100.0 | 100.0 | 100.0 | 100.0 |
| | Re-crystallization | After storage at 5°C for 1 month | CC | CC | CC | CC | CC | CC | CC | CC | CC |
| | Slime resistance | immersed in seawater for 1 month | 7 | 6 | 6 | 6 | 6 | 5 | 5 | 6 | 5 |
| | | immersed in seawater for 2 months | 7 | 6 | 6 | 6 | 4 | 4 | 4 | 4 | 4 |
| | | immersed in seawater for 3 months | 6 | 5 | 5 | 5 | 3 | 3 | 3 | 3 | 3 |
| | | immersed in seawater for 4 months | 6 | 5 | 4 | 4 | 3 | 3 | 3 | 3 | 3 |

## Claims

1. An antifouling coating composition comprising:
a coating film forming resin (A),
at least one inorganic copper antifouling agent (B) selected from the group consisting of copper suboxide, copper thiocyanate, basic copper sulfate, copper chloride, copper oxide and powdery copper as an antifouling agent, and further comprising
N,N'-dimethyl-N'-tolyl-(N-fluorodichloromethylthio) sulfamide (C) as a slime resistant agent.

2. The antifouling coating composition according to claim 1 wherein the antifouling agent (B) is contained in an amount of 60 to 1000 parts by weight based on 100 parts by weight of the coating film forming resin (A).

3. The antifouling coating composition according to claim 1 wherein the antifouling agent (C) is contained in an amount of 1.4 to 80 parts by weight based on 100 parts by weight of the coating film forming resin (A).

4. The antifouling coating composition according to any one of claims 1 to 3 wherein the antifouling agent (C) is contained in an amount of 0.1 to 100 parts by weight based on 100 parts by weight of the antifouling agent (B).

5. The antifouling coating composition according to any one of claims 1 to 4 wherein the coating film forming resin (A) is at least one resin selected from the group consisting of a metal salt bond containing acrylic resin, a trialkyl silyl group containing acrylic resin, an acrylic resin (excluding the above metal salt bond or trialkyl silyl group containing acrylic resins), a vinyl chloride resin, a vinyl chloride-vinyl acetate copolymer, a vinyl chloride-vinyl isobutyl ether copolymer, a chlorinated rubber resin, a chlorinated polyethylene resin, a chlorinated polypropylene resin, a styrene-butadiene resin, a polyester resin, an epoxy resin, a phenol resin, a synthetic rubber, a silicone rubber, a silicone resin, a petroleum resin, an oily resin, a fluorine resin, a polybutene resin, a polyurethane resin, a polyamide resin, a ketone resin, an alkid resin and a cumarone resin.

6. The antifouling coating composition according to any one of claims 1 to 5 wherein the coating film forming resin (A) further comprises at least one selected from the group consisting of rosin, a rosin ester resin, a rosin soap, naphthenic acid, versatic acid and triphenyl isobutenyl cyclohexane carboxylic acid.

7. The antifouling coating composition according to any one of claims 1 to 6 which further comprises at least one selected from an antifouling agent (D) except for the antifouling agents (B) and (C), a coloring pigment (E), an extender pigment (F), a dehydrating agent (G), a plasticizer (H) and an antisagging / antisettling agent (I).

8. The antifouling coating composition according to claim 7 which further comprises, as an antifouling agent (D), at least one organic antifouling agent selected from the group consisting of copper pyrithione, zinc pyrithione, 4,5-dichloro-2-n-octyl-4-isothiazoline-3-on, N,N-dimethyldichlorophenyl urea, 2,4,6-trichlorophenyl maleimide, 2-methylthio-4-tert-butylamino-6-butylamino-6-cyclopropyl-S-triadine, 2,4,5,6-tetrachloroisophthalonitrile, bisdimethyl dithiocarbamoyl zincethylene bisdithiocarbamate, chloromethyl-n-octyl disulfide, N,N'-dimethyl-N'-phenyl-(N-fluorodichloromethylthio) sulfamide, tetraalkylthiuram disulfide, zincdimethyl dithiocarbamate, zincethylene bisdithiocarbamate, 2,3-dichloro-N-(2',6'-diethylphenyl) maleimide and 2,3-dichloro-N-(2'-ethyl-6'-methylphenyl) maleimide.

9. The antifouling coating composition according to claim 7 which further comprises, as a coloring pigment (E), at least one selected from the group consisting of red iron oxide, titanium white, yellow iron oxide and an organic pigment.

10. The antifouling coating composition according to claim 7 which further comprises, as an extender pigment (F), at least one selected from the group consisting of talc, silica, mica, clay, zinc oxide, calcium carbonate, kaolin, alumina white, white carbon, aluminum hydroxide, magnesium carbonate, barium carbonate and barium sulfate.

11. The antifouling coating composition according to claim 7 which further comprises, as a dehydrating agent (G), at least one selected from the group consisting of anhydrous gypsum, hemihydrate gypsum (calcined gypsum), synthetic zeolite type adsorbent, an ortho-ester, a silicate and an isocyanate.

12. The antifouling coating composition according to claim 7 which further comprises, as a plasticizer (H), chlorinated paraffin in an amount of 0.5 to 5 % by weight based on all the solid components in the antifouling coating composition.

13. An antifouling coating film formed from the antifouling coating composition as claimed in any one of claims 1 to 12.

14. A coating film clad base material which surface is coated with a coating film obtainable by curing the antifouling coating composition as claimed in any one of claims 1 to 12.

15. An antifouling base material which surface is coated with a coating film obtainable by curing the antifouling coating composition as claimed in any one of claims 1 to 12, wherein the base material is always contact with seawater or fresh water.

16. An antifouling base material according to claim 15 wherein the base material is any one of an underwater structure, a outside plate of ship, a fishing net and a fishing implement.
